# EUROPEAN PATENT SPECIFICATION

(11) **EP 3 455 399 B1**
(45) Date of publication and mention of the grant of the patent: **09.09.2020**
(21) Application number: 17725167.5
(22) Date of filing: 18.05.2017
(51) Int. Cl.: D04H 1/50, D04H 3/007, D04H 3/147, D04H 3/16, D04H 1/4374, B32B 5/22, D04H 1/4382, D04H 1/4391, D04H 1/54, D04H 1/541, D04H 1/559, D04H 1/56, D04H 3/14

(54) **NONWOVEN LAMINATE FABRIC COMPRISING MELTBLOWN AND SPUNDBOND LAYERS**
VLIESLAMINATGEWEBE MIT SCHMELZGEBLASENEN UND SPINNVLIESSCHICHTEN
TISSU STRATIFIÉ NON TISSÉ COMPRENANT DES COUCHES PRODUITES PAR EXTRUSION SOUFFLAGE ET DE NON-TISSÉ FILÉ-LIÉ

(30) Priority: 18.05.2016 EP 16170156; 18.05.2016 EP 16170169; 03.04.2017 DE 102017003230
(43) Date of publication of application: 20.03.2019
(73) Proprietor: Fibertex Personal Care A/S, 9220 Aalborg (DK); Reifenhäuser GmbH & Co. KG Maschinenfabrik, 53844 Troisdorf (DE)
(72) Inventor: HANSEN, Morten, Rise, 9000 Aalborg (DK); SOMMER, Sebastian, 53844 Troisdorf (DE); HWA, Wong Kuan, Negeri Sembilan (MY); WEI, Tan, Wan, 47180 Puchong Selangor Darul Ehsan (MY)
(74) Representative: Laufhütte, Dieter
(86) International application number: PCT/EP2017/000601
(87) International publication number: WO 2017/198336

(56) References cited:
- EP-A1- 0 989 222
- EP-A1- 1 369 518
- EP-A1- 1 980 390
- EP-A2- 1 754 816
- WO-A1-00/28123
- WO-A1-96/21562
- WO-A1-97/23267
- WO-A1-2014/188238
- WO-A1-2017/198336
- WO-A2-02/18693
- JP-A- 2004 003 096
- JP-A- 2007 099 307
- JP-A- 2013 133 579
- US-A- 3 577 498
- US-A- 3 616 157
- US-A- 5 418 045
- US-A1- 2003 167 044
- US-A1- 2004 077 247
- US-A1- 2010 255 255

## Description

The invention relates to a nonwoven laminate fabric comprising a meltblown nonwoven layer sandwiched between first and second spundbond nonwoven layers. The invention further relates to a method for manufacturing such fabric and to the use of such fabric.

Nonwoven fabrics comprising a meltblown (M) layer sandwiched between spundbond (S) layers are known in the art and are commonly named SMS-type fabrics. These fabrics are frequently used in hygiene products such as baby diapers, feminine care protecting napkins and adult incontinence products, where high barrier properties to bodily fluids like urine, menses and so forth are essential. In SMS-type fabrics, the S layers account for the mechanical properties and surface touch and the M layers mainly account for the barrier properties.

A more recent technology when manufacturing spunbond nonwoven fabrics is the so-called high loft technology, where crimped fibers are spun and laid on a moving belt to obtain spunbond nonwoven fabrics. Due to the crimp of the fibers, the resulting spunbond fabrics have a higher loft than conventional spunbond fabrics made from linear fibers. The high loft leads to high softness also desirable for the hygiene industry. High loft spunbond fabrics are described in US 6,454,989 B1 where the crimp of the fibers is achieved upon using multicomponent fibers where the two components have different melt flow rates. Another high loft spunbond fabric is described in EP 2 343 406 B1 where the crimp of the fibers is achieved upon using multicomponent fibers where the two components have similar melt flow rates and melting points, but a certain difference in the ratio of Z-average to weight average molecular weight distributions. Yet another high loft fabric is described in EP 1 369 518 B1 where the crimp of the fibers is achieved upon using multicomponent fibers where one component is a homopolymer and another component is a co-polymer. WO 96/21562 A1 and US 2010/0255255 A1 disclose fabrics that comprise high-loft spunbonded layers in addition to meltblown layers.

Layered fabrics that do not comprise crimped high-loft fibers are disclosed in JP 2013-133579 A or JP 2004-003096 A.

The purpose of the invention is to propose a nonwoven laminate fabric having both excellent softness and barrier properties.

Against this background the invention relates to a nonwoven laminate fabric as defined in claim 1.

The meltblown layer constitutes the core of the fabric and the upper and lower spundbond layers cover both surfaces of the core. Such fabrics are usually termed SMS-type fabrics and encompass variants such as SMS, SMMS, SSMS, SSMMS, SMMMS and so forth. A double MM or SS layer results from a two-step deposition of meltblown or spunbonded fibers at distinct locations using distinct machinery, but is still understood as a meltblown or spunbond layer, respectively, according to the invention. The two M or S zones in a double MM or SS layer may have identical or different configuration, weight and properties. The same considerations apply to triple MMM or SSS layers and so forth. In one embodiment, the first and second spundbond nonwoven layers are identical.

According to the invention, spunbond layers comprising crimped fibers are hence combined with standard meltblown fibers sandwiched in between the spunbond layers. It has been experimentally found out that such a laminate may have superior performance in terms of softness and also barrier properties when compared to standard SMS products without high loft layers.

In one embodiment, both spundbond layers are high loft spunbond nonwoven layers comprising or consisting of crimped multicomponent fibers.

The invention goes beyond the simple use of per se known high loft spunbond fabrics in per se known SMS laminates. As apparent from the working examples, it has been found out that the liquid barrier efficiency of the meltblown layers - expressed in terms of liquid barrier properties per meltblown basis weight - increases when a high loft spunbond fabric is used as sandwiching structure. This is surprising as it could not be expected that the nature of the S layers could have an influence of the liquid barrier efficiency of the M layer. If any, the opposite could have been expected, because one could think that the quality of the M layer would become worse when laminated on a more uneven high loft S layer as compared to when laminated on a more even standard loft S layer as a basis. Without willing to be bound to theory, it is believed that the lower barrier performance of meltblown layers in conventional SMS structures may be due to a less flexible behaviour of the overall laminates. When an inflexible or relatively inflexible laminate is deformed during a liquid barrier test, or even more significantly in practice, some microstructures may break and the fabric may locally become more porous at the breaking points to open possible fluid paths that were not previously present. Due to the crimped spunbond fibers structure, laminates of the invention can have a relatively higher overall flexibility and therefore, according to this theory, there will be fewer breaks in microstructure and hence better barrier properties.

Considering that a low M content can be advantageous from the standpoint of, e.g., mechanical behaviour of the fabric, a high liquid barrier efficiency of the meltblown layers and hence the ability of maintaining a certain liquid barrier characteristic at lower basis weights (g/m²) of the M layers is very attractive.

The described effect has been observed to be particularly emphasized in certain preferred embodiments as described hereinafter.

Bonding between the layers of the fabric is effected by mechanical bonding through structured calender rolls in the fabrication. The surface structures of the calender rolls donate a specific bond pattern to the fabric. In so-called bonding zones, the fabric is heat-compressed and the fibers are firmly attached to each other. The bonding zones are discrete and can well be recognized against the remaining, unbonded part of the fabric. The bond pattern is described by the shape of the bonding zones, if discrete, the number of bonding dots per surface area, and by the "bond area", i.e., fraction of the overall fabric surface that is consumed by the bonding zones. The settings laid out in the following embodiments have been used to obtain the beneficial effects of the invention.

In one embodiment, the bond area of the fabric is 10-15% and preferably 12-14%.

In one embodiment, the bonding zones are constituted by discrete and preferably circular dots, wherein further preferably the dot area is 1-5 or 1.5-3 mm² and/or the dot diameter is 0.5-1.5 or 0.7-1.0 mm.

In one embodiment, the fabric comprises 20-30 and preferably 22-26 dots per cm².

These comparatively open bond patterns with low bond area allow for a flexible product.

As mentioned above, the invention allows for lowering the (absolute and relative) basis weights of the meltblown layers while maintaining identical liquid barrier properties. Lower meltblown basis weights are desirable because at constant overall basis weight of the laminate, better mechanical properties will be obtained at a lower meltblown basis weight. The nonwovens described in the following embodiments make use of this observation.

According to the invention, the basis weight of the meltblown layer is less than 3.0 g/m² and preferably less than 2.0 g/m². More specifically, according to the invention, the basis weight of the meltblown layer is between 0.5 and 3.0 g/m² and may preferably be between 1.0 and 2.0 g/m². The overall basis weight of the fabric may be between 10 and 20 g/m², preferably between 13 and 17 g/m².

Further according to the invention, the basis weight of the meltblown layer makes up 5-12% and preferably for 8-12% of the overall basis weight of the fabric. A meltblown content of as low as exactly or approximately 10% of the overall basis weight of the fabric has been found to obtain very good results.

A further observation within the context of the present invention is that a given machinery settings and output it will be possible to produce meltblown fibers of smaller diameter when the basis weight of the meltblown layers can become smaller. A smaller meltblown diameter can have additional beneficial effects on barrier properties without compromising other fabric properties.

In one embodiment, the average diameter of the meltblown fibers of the meltblown layer is below 3.0 µm, preferably below 2.0 µm and more preferably below 1.7 µm. For example, the average diameter of the meltblown fibers of the meltblown layer may lie between 0.8 and 3.0 µm, preferably between 1.0 and 2.0 µm. The linear mass density may be below 0.5 denier, preferably below 0.3 denier and more preferably below 0.2 denier.

The average diameter of the crimped spunbond fibers of the high loft spunbond layers and, if any, the regular spunbond fibers of the regular spundbond layers may lie between 15 and 20 µm. The linear mass density of the crimped spunbond fibers of the high loft spunbond layers and, if any, the regular spunbond fibers of the regular spundbond layers may be 1.4-2.0 denier.

In one embodiment the average crimp diameter of the crimped spunbond fibers of the high loft spunbond layers is 50-500 µm, preferably 60-150 µm and more preferably 80-125 µm.

According to the invention the density of the high loft spunbond layers is 0.02-0.08 g/cm³ and preferably 0.04-0.06 g/cm³.

In one embodiment, the crimped fibers are multicomponent fibers, preferably bicomponent fibers and more preferably side-by-side or eccentric sheath core bicomponent fibers. In order to obtain crimped spunbond fibers, the so-called multicomponent or, more specifically, bicomponent technology is used. In bicomponent fibers, there are two distinct zones over the cross-section of the fibers. These can be arranged in side-by-side configuration or eccentric sheath core configuration. Other possible fiber configurations suitable for creating crimped include trilobal, segmented pie or island in the sea. All fiber configurations can be solid or made as hollow arrangements. In one embodiment, the crimped fibers are helically crimped.

In one embodiment, the fibers include or consist of a polyolefin, preferably polypropylene, polyethylene or polypropylene-polyethylene-copolymers, more preferably polypropylene.

To generate crimp in a bicomponent spunbond fiber, two polymers with different characteristics are needed. The difference in characteristic can be effected, for example, by a difference in polydispersity (M_{w}/Mₙ) between the two polymers, by a difference in the melting points of the two polymers, by a difference of the crystallization rate of the two polymers, by a difference of the elasticity of the two polymers or by a difference of the melt flow rate (MFR) of the two polymers. In one embodiment, the two polymers of the bicomponent fiber differ in polydispersity by at least a factor 1.2.

In one embodiment, the weight ratio of the two different polymers in the bicomponent fiber is smaller 90/10, preferably smaller 80/20, more preferably smaller 70/30 and still more preferably smaller 60/40 to 80/20. The ratio shall be understood as a weight ratio over the cross-section when averaged over a representative length of the fiber. For combinations of polypropylene and polypropylene-polyethylene-copolymers, ratios of between 90/10 and 30/70 are preferred and ratios of between 70/30 and 40/60 are more preferred.

In one embodiment, the fabrics, when having an overall basis weight of at least 15 g/m² and a meltblown basis weight of less than 2 g/m², exhibit a value of hydrostatic head, when measured according to WSP80.6, of more than 160 mm, preferably of more than 180 mm and more preferably of more than 190 mm.

In one embodiment, the fabrics, when having a meltblown basis weight of less than 2 g/m², exhibit a meltblown efficiency, which is defined as overall hydrostatic head (mm) of the laminates divided by meltblown basis weight (g/m²), of more than 100 and preferably of more than 120.

In one embodiment, the fabrics, when having an overall basis weight of at least 15 g/m² and a meltblown basis weight of less than 2 g/m², exhibit a value of tensile strength in machine direction, when measured according to WSP 110,4, of more than 15 N/50mm and preferably of more than 17 N/50mm.

In one embodiment, the fabrics, when having an overall basis weight of at least 15 g/m² and a meltblown basis weight of less than 2 g/m², exhibit a value of tensile strength in cross-machine direction, when measured according to WSP 110.4, of more than 6 N/50mm and preferably of more than 7 N/50mm.

In one embodiment, the fabrics, when having an overall basis weight of at least 15 g/m² and a meltblown basis weight of less than 2 g/m², exhibit a value of tensile elongation in machine direction, when measured according to WSP 110.4, of more than 90%.

In one embodiment, the fabrics, when having an overall basis weight of at least 15 g/m² and a meltblown basis weight of less than 2 g/m², exhibit a value of tensile elongation in cross-machine direction, when measured according to WSP 110.4, of more than 120%.

The invention further relates to a method of manufacturing a fabric according to the invention comprising the steps of: (a) forming the first spunbond nonwoven layer upon depositing spunbond fibers on a moving belt; (b) forming the meltblown nonwoven layer upon depositing meltblown fibers on the surface of the first spunbond nonwoven layer; (c) forming the second spunbond nonwoven layer upon depositing spunbond fibers on the surface of the meltblown nonwoven layer; and (d) bonding the layers by thermal bonding through structured calender rolls; wherein at least one and preferably both spunbond nonwoven layers are high loft spunbond nonwoven layers and wherein at least part and preferably all of the spunbond fibers deposited on the moving belt and/or the meltblown layer are crimped multicomponent spunbond fibers.

For spinning the high loft spunbond nonwoven layers, it is preferred that the melt temperature lies at 250-265°C. The melt throughput per die hole may be set to 0.4-0.8 g/hole/min. The quench air temperature may be set to 18-22°C. The quench cabin pressure may be set to 3500-4000 Pa. The SAS gap, which is the distance of the guide plates in the lower part of the spin chamber just before the fibers enters the diffusor, may be chosen to be between 19-21 mm. With such settings, in conjunction with the polymers as described above, a very good quality of helically crimped fibers could be obtained and an emphasized effect on softness and barrier properties could be observed.

After quenching and laydown of the crimped spunbond fibers, it is important that the fibers are gently consolidated by means of a compaction roller. Within the concept of the present invention, it has been found advantageous to set the temperature of the compaction roller to between 50-90°C and to set the linear contact force of the compaction roller to less than 5 N/mm.

Still further, the invention relates to a hygiene product comprising a fabric according to the invention. Exemplary hygiene products comprise adult incontinence products, baby diapers and sanitary napkins. The hygiene products may further comprise granular absorbent material. The nonwoven according to the invention may serve as part of a core cover of a hygiene product and lie adjacent to a water impermeable film. Suitable granular absorbent material comprises super absorbent granulate/polymers (SAP). The core material may comprise a high degree (e.g. more than 50, 60 or 70 wt.%) of or consist exclusively of granular absorbent material. A high degree of granular absorbent material and a lower degree of side components, e.g., pulp/cellulose fibers results in a thinner and more comfortable product which may also require less shelf space and transport cost. As, however, the granular absorbent material gets more exposed to the backsheet, this may be perceived as negative feel by the consumer. The high loft spundbond layers of the fabric according to the invention when used as a core cover may contribute to an improved touch and feel. The high concentration of granular material in the core also leads to a greater risk for the film backsheet to be punctured by the granular absorbent material. The high loft spunbond layers of the invention may contribute to an improved ability to withstand such puncturing when positioned between the absorbent core and the backsheet film.

Other suitable applications in a hygiene product is the use of the product of this invention as a barrier leg cuff. A material of this invention which is soft and flexible and yet exhibits high hydrostatic head is very suitable for the use as so called barrier leg cuffs in hygiene products such as, e.g., baby diapers or incontinence products.

Further details and advantages of the present invention will be described with reference to the working examples and figures described in the following. The figures show:
- Figure 1:: a schematic illustration of an apparatus for producing an SMS-type nonwoven laminate according to one embodiment of the present invention;
- Figure 2:: a schematic illustration of a section of a crimped multicomponent fiber as comprised in a high loft spunbond layer of such laminate; and
- Figure 3:: schematic illustrations of different possible configurations of bicomponent fibers.

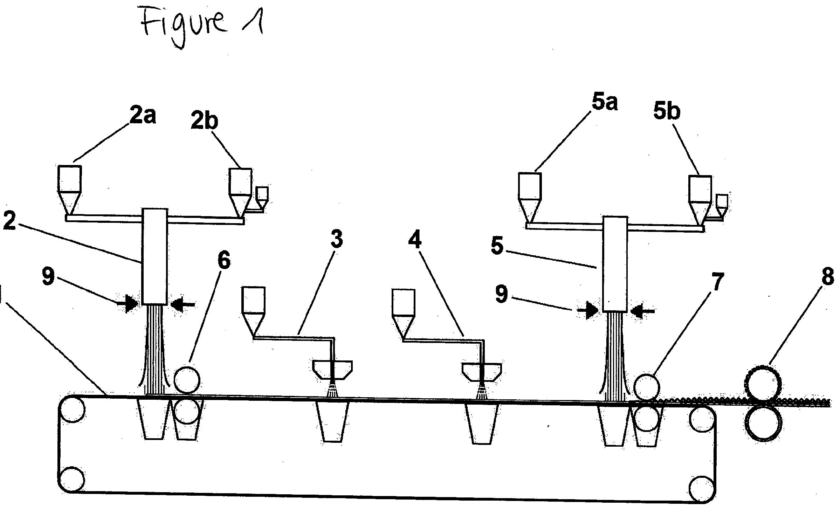

Figure 1 illustrates an apparatus for producing SMS-type nonwoven laminates of the present invention. Specifically, the machine is configured for producing an S_{H}MMS_{H} type laminate. It comprises, as main components, a moving belt 1, a first spinning machine 2 for forming a first high loft spunbond layer, a first meltblowing machine 3 for forming a first meltblown layer, a second meltblowing machine 4 for forming a second meltblown layer, and a second spinning machine 5 for forming a second high loft spunbond layer. Both spinning machines 2 and 5 are configured to produce bicomponent fibers, as symbolized by the two polymer reservoirs 2a, 2b and 5a, 5b, respectively, for each machine. Downstream each spinning machine 2 and 5 there is a precompaction roller 6 and 7, respectively. Downstream of the machines 2-5 and the precompaction rollers 6-7 there is a calender roll 8 for firmly bonding the layers of the laminate to each other. Reference numeral 9 designates the SAS gaps of both spinning machines 2 and 5.

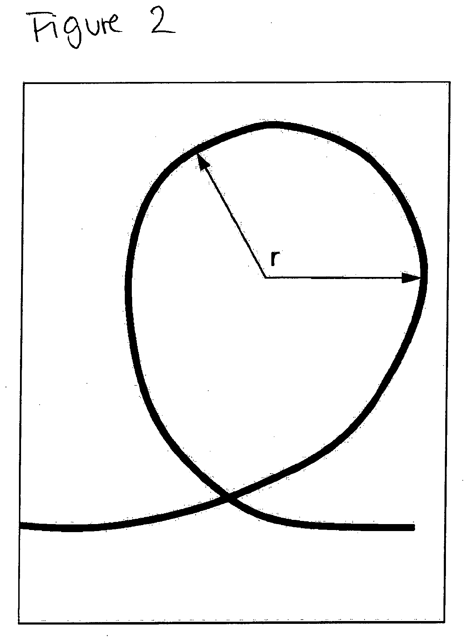

Figure 2 is a schematic illustration of a section of crimped endless fibers as present in high loft spunbond layers of a fabric of the invention. The crimped fiber sections form circles with a certain crimp radius and hence define a certain crimp area. The crimp area, for example, can be 20,000-50,000 µm², corresponding to a crimp radius of approximately 80-125 µm.

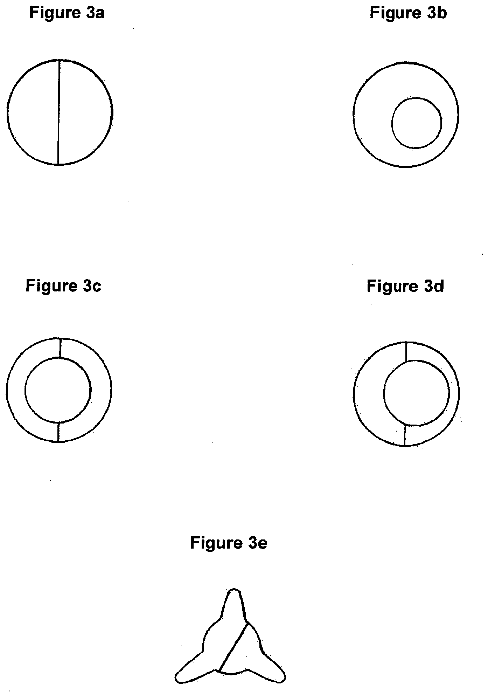

Figure 3 shows schematic illustrations of different possible configurations of bicomponent fibers. The fibers comprise first and second polymeric components arranged in distinct zones within the cross-section of the fiber that extend continuously along the length of the fiber. A side-by-side arrangement is depicted in Figure 3a. An eccentric sheath/core arrangement is depicted in Figure 3b, where one component fully surrounds the other but is asymmetrically located in the fiber to allow fiber crimp. The fibers can also be hollow as shown in Figure 3c and 3d or can be multilobal fibers as shown in Figure 3e.

A number of S_{H}-M-M-S_{H} laminate nonwoven sheets have been produced on a machine as shown in Figure 1 to demonstrate the beneficial properties of laminates of the present invention. The expression S_{H} denotes a high loft spunbond layer consisting of helically crimped side-by-side bicomponent fibers. All sheets have been prepared using a Reicofil spunbond - meltblown machine. The spunbond spinneret had approximately 5000 holes per meter. The meltblown spinneret was a single row die having 35-42 holes per inch (Reicofil ® Single Row Technology). In the following Table 1, an overview over the configurations of the different sheets is given.

**Table 1**

| **Ex.** | **BW** | **1^{st} S** | | **1^{st} M** | **2^{nd} M** | **2^{nd} S** | | **BW M** | **Bonding** |
|---|---|---|---|---|---|---|---|---|---|
| | **g/m²** | **g/m²** | | **g/m²** | **g/m²** | **g/m²** | | **%** | |
| **A** | 15 | 7.5 | S | 0 | 0 | 7.5 | S | 0 | 18.8% Oval |
| **B** | 15 | 7.5 | S | 0 | 0 | 7.5 | S | 0 | 13.6% Open Dot |
| **C** | 17 | 8.5 | S_{H} | 0 | 0 | 8.8 | S_{H} | 0 | 13.6% Open Dot |
| **D** | 15 | 6.5 | S | 1.0 | 1.0 | 6.5 | S | 13.3 | 13.6% Open Dot |
| **1** | 15 | 6.6 | S_{H} | 0.9 | 0.9 | 6.6 | S_{H} | 12.0 | 13.6% Open Dot |
| **2** | 15 | 6.7 | S_{H} | 0.8 | 0.8 | 6.7 | S_{H} | 10.7 | 13.6% Open Dot |
| **3** | 15 | 6.8 | S_{H} | 0.7 | 0.7 | 6.8 | S_{H} | 9.33 | 13.6% Open Dot |
| **4** | 17 | 7.6 | S_{H} | 0.9 | 0.9 | 7.6 | S_{H} | 10.6 | 13.6% Open Dot |
| **5** | 17 | 7.7 | S_{H} | 0.8 | 0.8 | 7.7 | S_{H} | 9.4 | 13.6% Open Dot |
| **6** | 17 | 7.8 | S_{H} | 0.7 | 0.7 | 7.8 | S_{H} | 8.2 | 13.6% Open Dot |

Examples A-D are comparative examples.
Example A is a regular 15 g/m² SS nonwoven based on uncrimped fibers without meltblown layers. The calender settings were such as to obtain an 18.8% oval bond. The S layers each have a basis weight of 7.5 g/m². The PP polymer Sabic 511A with an MFR of 25 was used for the S layers.
Example B corresponds to Example A but with different calender settings to obtain an open dot bonding with a bonding area of 13.6% and 24 dots per cm². Each bonding point is circular and had a diameter of 0.85 mm.
Example C is 17 g/m² S_{H}S_{H} spunbond nonwoven based on high loft spunbond layers having helically crimped fibers without meltblown layers. The S layers each have a basis weight of 8.5 g/m². The helically crimped fibers of the S_{H} layers comprised two different polymers in a 50/50 relation and side-by-side configuration. Sabic 511A was used for one side. The PP/PE random copolymer Molplen RP248R with an MFR of also 25 was used for the other side. Bonding is as in Example B.
Example D is 15 g/m² SMMS nonwoven based on uncrimped fibers and with two meltblown layers each 1.0 g/m². The S layers each have a basis weight of 6.5 g/m². Bonding is again as in Examples B and C. The PP polymer Borealis HL708FB with an MFR of 800 was used for the M layers. The settings when producing the M layers were as follows: die temperature: 280°C; air temperature 275°C; airflow: 3200 m³/h; distance between die and spinbelt: 98 mm.

Examples 1-6 are inventive examples.

Example 1 is a 15 g/m² S_{H}MMS_{H} spunbond nonwoven based on based on high loft spunbond layers having helically crimped fibers and with two layers of meltblown fibers sandwiched in between. The helically crimped fibers of the S_{H} layers were as in Example C. Borealis HL708FB was used for the M layers, as in Example D. The S_{H} layers each have a basis weight of 6.6 g/m². The M layers each have a basis weight of 0.9 g/m². The settings when producing the M layers were as in Example D. Bonding was as in Examples B, C and D.

The difference of Example 2 to the otherwise identical Example 1 is the area weight of the S_{H} layers and M layers. The S_{H} layers each have a basis weight of 6.7 g/m². The M layers each have a basis weight of 0.8 g/m².

The difference of Example 3 to the otherwise identical Examples 1 and 2 is the area weight of the S_{H} layers and M layers. The S_{H} layers each have a basis weight of 6.8 g/m². The M layers each have a basis weight of 0.7 g/m².

The differences of Examples 4-6 to the otherwise identical Examples 1-3 are the overall basis weights and, consequently, the basis weights of the individual layers. The overall basis weight in all Examples 4-6 is 17 g/m². In Example 4, the S_{H} layers each have a basis weight of 7.6 g/m² and the M layers each have a basis weight of 0.9 g/m². In Example 5, the S_{H} layers each have a basis weight of 7.7 g/m² and the M layers each have a basis weight of 0.8 g/m². In Example 6, the S_{H} layers each have a basis weight of 7.8 g/m² and the M layers each have a basis weight of 0.7 g/m².

In order to determine the fiber size for both the spunbond fibers and the meltblown fibers in each of the Examples D and 1-3, samples of each example have been analyzed by scanning electron microscopy (SEM) with a Phenom ProX machine and Fibermetric v2.1 evauation software applying a 400x magnification for the S fibers and a 3000x magnification for the M fibers. 100 data points have been measured per example, each for spunbond and meltblown. The results are given in Table 2 below.

**Table 2**

| **Example** | **Spunbond** | | **Meltblown** | |
|---|---|---|---|---|
| | **Mean [µm]** | **Std. Dev. [µm]** | **Mean [µm]** | **Std. Dev. [µm]** |
| **D** | 18.1 | 1.19 | 1.71 | 0.591 |
| **1** | 17.8 | 1.39 | 1.69 | 0.546 |
| **2** | 17.0 | 0.963 | 1.55 | 0.479 |
| **3** | 16.9 | 0.928 | 1.35 | 0.439 |

All process settings for reference Example D and Examples 1-6 are the same. Only the level of meltblown fibers is different. In Example D, the level is 1 g/m² per individual M laydown. In Examples 1-3, the level is 0.9 g/m², 0.8 g/m² and 0.7 g/m² per individual M laydown, respectively. In Examples 4-6, again, the level is 0.9 g/m², 0.8 g/m² and 0.7 g/m² per individual M laydown, respectively.

It can be recognized from the results that reducing the level of meltblown basis weight at otherwise constant parameters, in particular at constant airflow, will lead to a smaller fiber diameter. The mean diameter in Example D with a level of 1.0 g/m² each is 1,71 µm and becomes slightly lower with decreasing levels of 0.9 g/m², 0.8 g/m² and 0.7 g/m², respectively, in the set of Examples 1-3 (1,69 µm, 1,55 µm, 1,35 µm).

Different tests for physical properties have been carried out for each of the Examples A-D and 1-6.

The tests for hydrostatic head properties were carried out according to WSP80,6. In this test the nonwoven fabric is mounted to form a cover on a test head reservoir. The fabric is then subjected to a standardized water pressure increase at a constant rate until leakage appears on the outer surface of the nonwoven. The test results for the hydrostatic water pressure test are measured at the point where the first drops appear in three separate areas on the specimen. The rate of increase of the water pressure (height of the water column) used was 60 ± 3 cm H₂O/min. The test head used was a 100 cm² test head. Reading of test result was done when three droplets appeared on the surface of the test specimen. The pressure (height of the water column) obtained in millimeters was reported.

Tensile strength in machine direction (TSMD), tensile elongation in machine direction (TEMD), tensile strength in cross-machine direction (TSCD) and tensile elongation in cross-machine direction (TECD) were measured according to WSP 110,4.

The fabric caliper was measured according to WSP 120,6.

The results are reported in Table 3 below.

**Table 3**

| **Example** | **BW** | **Caliper** | **TSMD** | **TEMD** | **TSCD** | **TECD** | **Hydrostatic head** |
|---|---|---|---|---|---|---|---|
| | **g/m²** | **mm** | **N/50mm** | **%** | **N/50mm** | **%** | **mm** |
| **A** | 15 | 0.18 | 29 | 40 | 14 | 50 | 90.4 |
| **B** | 15 | 0.22 | 17.5 | 111 | 9.68 | 151 | 111 |
| **C** | 17 | 0.24 | 20.6 | 109 | 11.5 | 133 | 117 |
| **D** | 15 | 0.22 | 13.8 | 85.9 | 6.00 | 118 | 167 |
| **1** | 15 | 0.26 | 17.6 | 88.2 | 8.63 | 122 | 194 |
| **2** | 15 | 0.24 | 17.3 | 94.7 | 7.90 | 118 | 192 |
| **3** | 15 | 0.23 | 18.2 | 95.0 | 8.72 | 122 | 211 |
| **4** | 17 | 0.23 | 19.2 | 95.8 | 9.8 | 121 | 205 |
| **5** | 17 | 0.24 | 22.8 | 102 | 10.7 | 124 | 212 |
| **6** | 17 | 0.25 | 21.1 | 98.2 | 10.6 | 131 | 198 |

The traditional spunbond-only SS nonwovens of Example A based on uncrimped fibers and bonded with an 18.8% bond area exhibited a higher value in TSMD and TSCD than the spunbond-only SS nonwovens of Examples B-C. The elongation values for Example A, on the other hand, are lower than the elongation values for Examples B-C. Both these observations are suspected to be attributable to the combined application of uncrimped fibers and a higher bond area.

Hydrostatic head of Example A was measured at 90.4 mm, which is a comparatively low value. This is believed to be attributable to a crisp material with little flexibility, in line with low elongation values, and, of course, due to the missing M layers. Example B exhibits a higher hydrostatic head value of 111 mm. It is believed that this is because the material is more flexible, as also seen in elongation values. Example C shows a still higher hydrostatic head value of 117 mm. It is believed that this is because the helically crimped individual fibers are more flexible and this emphasizes a beneficial effect of the open dot bonding on hydrostatic head.

Example D comprises a meltblown layer and hence has a much higher hydrostatic head value (167 mm) than otherwise similar Example B. Tensile strength and elongation properties are lower due to the replacement of some spunbond material with meltblown material.

All Examples 1-3 demonstrate a significantly higher hydrostatic head value when compared to Example D, even though the meltblown content is indeed lower (and the tensile strength hence higher). It is believed that the effect of the significantly higher hydrostatic head value of Examples 1-3 when compared to Example D can be attributed to the higher flexibility of the helically crimped individual fibers in combination with the open dot bonding. What can furthermore be observed when comparing Examples 1-3 to each other is that the hydrostatic head becomes slightly higher with decreasing meltblown content. This effect is believed to be attributable to the smaller average meltblown fiber diameter at decreasing level of meltblown basis weight at otherwise constant parameters, in particular at constant airflow, as reported in Table 2.

The same trend is observed for the nonwovens of Examples 4-6, which have a higher spunbond basis weight (and hence content) than the nonwovens of Examples 1-3, but are otherwise identical.

An overview on the most important findings above is given in Table 4 below, which additionally calculates a *"meltblown efficiency"* value for the individual nonwoven laminates, which is hydrostatic head (mm) of the laminates divided by overall meltblown basis weight (g/m²) of the laminates.

**Table 4**

| **Example** | **BW** | **1^{st} S** | | **1^{st} M** | **2^{nd} M** | **2^{nd} S** | | **Hydrostatic head** | **M efficiency** |
|---|---|---|---|---|---|---|---|---|---|
| | **g/m²** | **g/m²** | | **g/m²** | **g/m²** | **g/m²** | | **mm** | **mm** / **(g/m²)** |
| **A** | 15 | 7.5 | S | 0 | 0 | 7.5 | S | 90.4 | |
| **B** | 15 | 7.5 | S | 0 | 0 | 7.5 | S | 111 | |
| **C** | 17 | 8.5 | S_{H} | 0 | 0 | 8.8 | S_{H} | 117 | |
| **D** | 15 | 6.5 | S | 1.0 | 1.0 | 6.5 | S | 167 | 83.5 |
| **1** | 15 | 6.6 | S_{H} | 0.9 | 0.9 | 6.6 | S_{H} | 194 | 108 |
| **2** | 15 | 6.7 | S_{H} | 0.8 | 0.8 | 6.7 | S_{H} | 192 | 120 |
| **3** | 15 | 6.8 | S_{H} | 0.7 | 0.7 | 6.8 | S_{H} | 211 | 151 |
| **4** | 17 | 7.6 | S_{H} | 0.9 | 0.9 | 7.6 | S_{H} | 205 | 114 |
| **5** | 17 | 7.7 | S_{H} | 0.8 | 0.8 | 7.7 | S_{H} | 212 | 133 |
| **6** | 17 | 7.8 | S_{H} | 0.7 | 0.7 | 7.8 | S_{H} | 198 | 141 |

It can be gathered from Table 4 that the meltblown efficiency values for the meltblown layers in the fabrics of the invention according to Examples 1-6 is generally and sometimes significantly above 100 mm per g/m², whereas it is significantly below in comparative Example D. Considering that a low meltblown content can be advantageous from the standpoint of mechanical behaviour, level of softness and cost of the sheet, a high meltblown efficiency as exhibited by the inventive sheets is hence very desirable.

To summarize the findings of the examples, using the nonwoven webs of the invention have a very desirable softness characteristics due to the outer high loft spunbond layers. At the same time, the barrier properties measured as hydrostatic head have been found to be higher when compared to prior art SMS structures that have the same or even higher meltblown contents.

## Claims

1. A nonwoven laminate fabric comprising a meltblown nonwoven layer sandwiched between first and second spundbond nonwoven layers, wherein at least one of the spundbond layers is a high loft spunbond nonwoven layer comprising or consisting of crimped multicomponent fibers and having a density of between 0.02 and 0.08 g/cm³, and wherein the fabric is calender bonded,
**characterized in that**
the basis weight of the meltblown layer is 0.5-3.0 g/m² and makes up 5-12% of the overall basis weight of the fabric.

2. The fabric of claim 1, wherein both spunbond layers are high loft spunbond nonwoven layers comprising or consisting of crimped multicomponent fibers.

3. The fabric of any preceding claim, wherein the fraction of the overall fabric surface that is consumed by calender bonding zones, where the fabric is heat-compressed and the fibers are firmly attached to each other, is 10-15% and preferably 12-14%.

4. The fabric of any preceding claim, wherein the calender bonding zones, where the fabric is heat-compressed and the fibers are firmly attached to each other, are constituted by discrete and preferably circular dots, wherein further preferably the dot area is 1-5 or 1.5-3 mm² and/or the dot diameter is 0.5-1.5 or 0.7-1.0 mm.

5. The fabric of claim 4, wherein the fabric comprises 20-30 and preferably 22-26 dots per cm².

6. The fabric of any preceding claim, wherein the basis weight of the meltblown layer is less than 2.0 g/m².

7. The fabric of any preceding claim, wherein the basis weight of the meltblown layer makes up 8-12% of the overall basis weight of the fabric.

8. The fabric of any preceding claim, wherein the average diameter of the meltblown fibers of the meltblown layer is below 3.0 µm, preferably below 2.0 µm and more preferably below 1.7 µm.

9. A method of manufacturing a fabric of any preceding claim comprising the steps of:
(a) forming the first spunbond nonwoven layer upon depositing spunbond fibers on a moving belt;
(b) forming the meltblown nonwoven layer upon depositing meltblown fibers on the surface of the first spunbond nonwoven layer; and
(c) forming the second spunbond nonwoven layer upon depositing spunbond fibers on the surface of the meltblown nonwoven layer;
(d) bonding the layers by thermal bonding through structured calender rolls;
wherein at least one and preferably both spunbond nonwoven layers are high loft spunbond nonwoven layers and wherein at least part and preferably all of the spunbond fibers deposited on the moving belt and/or the meltblown layer are crimped multicomponent spunbond fibers.

10. A hygiene product comprising a fabric according to any preceding claim.

## Patentansprüche

1. Vlieslaminat-Textilerzeugnis, aufweisend eine schmelzgeblasene Vliesschicht, die sandwichartig zwischen ersten und zweiten Spinnvliesschichten angeordnet ist, wobei zumindest eine der Spinnvliesschichten eine hochbauschige Spinnvliesschicht ist, die gecrimpte Mehrkomponentenfasern aufweist oder aus diesen besteht und eine Dicht von 0,02 und 0,08 g/cm³ besitzt, wobei das Textilerzeugnis kalendergebondet ist,
**dadurch gekennzeichnet, dass**
das Grundgewicht der schmelzgeblasenen Schicht 0,5 - 3,0 g/m² beträgt und 5 - 12 % des gesamten Grundgewichts des Textilerzeugnisses ausmacht.

2. Textilerzeugnis nach Anspruch 1, wobei beide Spinnvliesschichten High-Loft-Spinnvliesschichten sind, die gecrimpte Mehrkomponentenfasern aufweisen oder aus diesen bestehen.

3. Textilerzeugnis nach einem der vorstehenden Ansprüche, wobei der Anteil der gesamten Textilerzeugnis-Oberfläche, der von Kalenderbonding-Zonen eingenommen wird, wo das Textilerzeugnis heißgepresst wird und die Fasern eng aneinander angebracht werden, 10 -15 % und bevorzugt 12 -14 % beträgt.

4. Textilerzeugnis nach einem der vorstehenden Ansprüche, wobei die Kalenderbonding-Zonen, wo das Textilerzeugnis heißgepresst wird und die Fasern eng aneinander angebracht werden, durch diskrete und bevorzugt kreisförmige Punkte gebildet werden, wobei ferner bevorzugt die Punktfläche 1 - 5 oder 1,5 - 3 mm² beträgt und/oder der Punktdurchmesser 0,5 - 1 oder 0,7 - 1,0 mm beträgt.

5. Textilerzeugnis nach Anspruch 4, wobei das Textilerzeugnis 20 - 30 und bevorzugt 22 - 26 Punkte pro cm² aufweist.

6. Textilerzeugnis nach einem der vorstehenden Ansprüche, wobei das Grundgewicht der schmelzgeblasenen Schicht 2,0 g/m² beträgt.

7. Textilerzeugnis nach einem der vorstehenden Ansprüche, wobei das Grundgewicht der schmelzgeblasenen Schicht 8-12 % des Gesamtgrundgewichts des Textilerzeugnisses ausmacht.

8. Textilerzeugnis nach einem der vorstehenden Ansprüche, wobei der durchschnittliche Durchmesser der schmelzgeblasenen Fasern der schmelzgeblasenen Schicht 3,0 µm, bevorzugt weniger als 2,0 µm und ferner bevorzugt unterhalb 1,7 µm beträgt.

9. Verfahren zur Herstellung eines Textilerzeugnisses nach einem der vorstehenden Ansprüche, wobei das Verfahren die folgenden Schritte umfasst:
(a) Bilden der ersten Spinnvliesschicht bei Abscheiden von Spinnvliesfasern auf einem sich bewegenden Band;
(b) Bilden der schmelzgeblasenen Vliesschicht bei Abscheiden von Spinnvliesfasern auf der Oberfläche der ersten Spinnvliesschicht; und
(c) Bilden der zweiten Spinnvliesschicht bei Abscheiden von Spinnvliesfasern auf der Oberfläche der schmelzgeblasenen Vliesschicht;
(d) Bonden der Schichten durch thermisches Bonden durch strukturierte Kalenderwalzen;
wobei zumindest eine und bevorzugt beide Spinnvliesschichten High-Loft-Spinnvliesschichten sind, und wobei zumindest ein Teil und bevorzugt alle der Spinnvliesfasern, die auf dem sich bewegenden Band abgeschieden werden, und/oder die schmelzgeblasene Schicht gecrimpte Mehrkomponenten-Spinnvliesschichten sind.

10. Hygieneartikel, aufweisend ein Textilerzeugnis nach einem der vorstehenden Ansprüche.

## Revendications

1. Tissu stratifié non tissé comprenant une couche non tissée obtenue par extrusion-soufflage prise en sandwich entre des première et deuxième couches non tissées filées-liées, dans lequel au moins une des couches filées-liées est une couche non tissée filée-liée à gonflant élevé comprenant des fibres à multicomposants frisées ou constituée de fibres à multicomposants frisées et ayant une densité comprise entre 0,02 et 0,08 g/cm³, et le tissu étant lié par calandrage,
**caractérisé en ce que**
le poids de base de la couche obtenue par extrusion-soufflage va de 0,5 à 3,0 g/m² et représente de 5 à 12 % du poids de base total du tissu.

2. Tissu selon la revendication 1, dans lequel les deux couches filées-liées sont des couches non tissées filées-liées à gonflant élevé comprenant des fibres à multicomposants frisées ou consistant en des fibres à multicomposants frisées.

3. Tissu selon une quelconque revendication précédente, dans lequel la fraction de la surface totale de tissu qui est consommée par des zones de liaison par calandrage, où le tissu est thermocomprimé et les fibres sont fermement attachées les unes aux autres, va de 10 à 15 % et de préférence de 12 à 14 %.

4. Tissu selon une quelconque revendication précédente, dans lequel les zones de liaison par calandrage, où le tissu est thermocomprimé et les fibres sont fermement attachées les unes aux autres, sont constituées par des points discrets et de préférence circulaires, dans lequel en outre de préférence la surface des points va de 1 à 5 ou de 1,5 à 3 mm² et/ou le diamètre des points va de 0,5 à 1,5 ou de 0,7 à 1,0 mm.

5. Tissu selon la revendication 4, dans lequel le tissu comprend de 20 à 30 et de préférence de 22 à 26 points par cm².

6. Tissu selon une quelconque revendication précédente, dans lequel le poids de base de la couche obtenue par extrusion-soufflage est inférieur à 2,0 g/m².

7. Tissu selon une quelconque revendication précédente, dans lequel le poids de base de la couche obtenue par extrusion-soufflage représente de 8 à 12 % du poids de base total du tissu.

8. Tissu selon une quelconque revendication précédente, dans lequel le diamètre moyen des fibres obtenues par extrusion-soufflage de la couche obtenue par extrusion-soufflage est en dessous de 3,0 µm, de préférence en dessous de 2,0 µm et plus préférablement en dessous de 1,7 µm.

9. Procédé de fabrication d'un tissu selon une quelconque revendication précédente comprenant les étapes consistant à :
(a) former la première couche non tissée filée-liée lors du dépôt de fibres filées-liées sur une bande en mouvement ;
(b) former la couche non tissée obtenue par extrusion-soufflage lors du dépôt de fibres obtenues par extrusion-soufflage sur la surface de la première couche non tissée filée-liée ; et
(c) former la deuxième couche non tissée filée-liée lors du dépôt de fibres filées-liées sur la surface de la couche non tissée obtenue par extrusion-soufflage ;
(d) lier les couches par liaison thermique par des rouleaux de calandrage structurés ;
dans lequel au moins une des deux couches non tissées filées-liées et de préférence les deux couches non tissées filées-liées sont des couches non tissées filées-liées à gonflant élevé et dans lequel au moins une partie des fibres filées-liées et de préférence toutes les fibres filées-liées déposées sur la bande en mouvement et/ou la couche obtenue par extrusion-soufflage sont des fibres filées-liées à multicomposants frisées.

10. Produit d'hygiène comprenant un tissu selon une quelconque revendication précédente.
